# EUROPÄISCHE PATENTSCHRIFT

(11) **EP 0 897 493 B1**
(45) Veröffentlichungstag und Bekanntmachung des Hinweises auf die Patenterteilung: **15.03.2000**
(21) Anmeldenummer: 97917926.4
(22) Anmeldetag: 29.04.1997
(51) Int. Cl.: F16H 47/04

(54) **VERFAHREN ZUM STEUERN DER KUPPLUNGEN EINES HYDROSTATISCH-MECHANISCHEN LEISTUNGSVERZWEIGUNGSGETRIEBES**
PROCESS FOR CONTROLLING THE COUPLINGS OF A HYDROSTATIC AND MECHANICAL TORQUE DIVISION GEARING
PROCEDE POUR COMMANDER LES EMBRAYAGES D'UNE TRANSMISSION A DIVISION DE PUISSANCE MECANO-HYDROSTATIQUE

(30) Priorität: 30.04.1996 AT 77896
(43) Veröffentlichungstag der Anmeldung: 24.02.1999
(73) Patentinhaber: STEYR-DAIMLER-PUCH AKTIENGESELLSCHAFT, 1010 Wien (AT)
(72) Erfinder: WÖNTNER, Gebhard, A-4493 Wolfern (AT)
(86) Internationale Anmeldenummer: AT9700082
(87) Internationale Veröffentlichungsnummer: WO9741370

(56) Entgegenhaltungen:
- EP-A- 0 234 136
- WO-A-90/02059
- WO-A-91/01461
- DE-A- 3 305 295
- DE-A- 4 433 488

## Beschreibung

Die Erfindung handelt von einem Verfahren zum Steuern eines hydrostatisch-mechanischen Leistungsverzweigungsgetriebes, das aus einer verstellbaren Hydrostateinheit, einem mehrwelligen Summierungsplanetengetriebe zur Zusammenführung von mechanischem Zweig und hydrostatischem Zweig und einem nachgeschalteten Stufengetriebe zur Bildung von in Synchronpunkten aneinander anschließenden Schaltbereichen besteht, welche mittels Verstellung der Hydrostateinheit durchfahren werden, wobei bei jeder Schaltung von einem alten Bereich in einen nächsten Bereich zuerst bei Erreichen der Synchrondrehzahl der Befehl zum Schließen der Kupplung für den nächsten Bereich gegeben wird, dann die Lastübergabe von der Kupplung für den alten Bereich zu der Kupplung für den nächsten Bereich durch Verstellen der Hydrostateinheit vorgenommen wird und dann erst der Befehl zum Öffnen der Kupplung für den alten Bereich gegeben wird.

Die Kupplungen werden in derartigen Getrieben in der Regel hydraulisch geschaltet. Bereichsschaltungen werden in mehreren Schritten vorgenommen, wobei mehrere Kupplungen und der Hydrostat in einer bestimmten Reihenfolge, und in Abhängigkeit von Zustandssignalen bzw Vollzugsmeldungen, betätigt werden. Die Steuerung benötigt ein Rückmeldesignal für die tatsächliche Stellung bestimmter Kupplungen. Das Betätigungssignal genügt nicht, es könnte ja auch eine Kupplung defekt oder eine Druckleitung leck sein, sodaß die Kupplung trotz "Vollzugsmeldung" nicht eingerückt ist. Im Falle einer Klauenkupplung könnten auch gerade die beiden Kupplungshälften Klaue gegen Klaue stehen oder eine Schaltgabel hängengeblieben sein.

Aus der EP 280 757-A1 ist es bei einer Ausführungsform eines derartigen Getriebes bekannt, die Drucksignalleitung zu den Kupplungen über Zweigleitungen mit einem Drucksensor oder Druckschalter zu verbinden. Bei diesem bekannten Getriebe wird im Zuge einer Bereichsschaltung nach dem Befehl zum Einrücken der dem nächsten Bereich zugeordneten Kupplung und noch einmal nach dem Befehl zum Ausrücken der dem vorhergehenden Bereich zugeordneten Kupplung auf das Rückmeldesignal des jeweiligen Drucksensors oder Druckschalters gewartet, bevor der nächste Schritt der Bereichsschaltung ausgeführt wird.

Zum einen verlängert dieses zweimalige Warten die Dauer einer Bereichsschaltung und führt während starken Beschleunigens zu einem kurzzeitigen Abfall der Beschleunigung, besonders, wenn die Druckschalter über lange Leitungen mit ihrer Kupplung verbunden sind. Zum Anderen ist das Ausfallrisiko derartiger noch dazu gehäuft auftretender Druckschalter (bei einem Getriebe mit vier Bereichen sind in der Regel sechs Kupplungen nötig) beträchtlich. Drucksensoren sind zwar sicherer, aber wirklich zuverlässige bzw im Betrieb überprüfbare Sensoren sind teuer. Die Folge eines falschen Zustandssignales ist mindestens, daß keine Bereichsschaltungen mehr möglich sind.

Diese Probleme bestehen unabhängig von der Art der verwendeten Kupplungen (es kann sich um Klauenkupplungen, Zahnkupplungen, Synchronisierkupplungen oder Lamellenkupplungen handeln) und unabhängig von der Art des dem Summierungsplanetengetriebe nachgeschalteten Stufengetriebes. Es besteht also auch bei einem Getriebe gemäß der US-A-5,207,736, wo anstelle des Druckes der Kupplungsbetätigung die Position der Schaltmuffen mittels Sensoren abgefragt werden kann.

WO 90/2059A zeigt die Merkmale des Oberbegriffes des Anspruches 1.

Es ist somit Ziel der vorliegenden Erfindung, ein Steuerverfahren anzugeben, das den Ablauf der Bereichsschaltungen bei voller Aufrechterhaltung der Betriebssicherheit beschleunigt und ohne Druckschalter oder Drucksensoren auskommt und somit kostengünstiger ist.

Erfindungsgemäß wird das dadurch erreicht, daß der Befehl zum Öffnen der Kupplung für den alten Bereich erst dann und nur dann gegeben wird, wenn festgestellt wird, daß während der Lastübergabe ein charakteristischer Drehzahlwert des Summierungsplanetengetriebes konstant bleibt.

So wird vor allem erkannt, ob die Kupplung auch tatsächlich eingerückt ist, es besteht keine Überwachungslücke mehr zwischen Befehl und Ausführung. Da weiters nicht auf ein Rückmeldesignal gewartet werden muß, wird die Bereichsschaltung in minimaler Zeit und ohne kurzzeitiges Abfallen der Beschleunigung ausgeführt. Weiters werden die vielen und kostspieligen und/oder teuren Druckschalter bzw Druckfühler bzw Positionssensoren eingespart. Es sind nur ein oder zwei Impulsgeber zur Drehzahlmessung erforderlich, diese sind jedoch meist zur Lieferung der für die Regelung erforderlichen Signale sowieso vorhanden. In solchen Fällen erfordert die Einführung des erfindungsgemäßen Verfahrens keinerlei Änderungen im Getriebe. Weiters beruht das Verfahren auf im Getriebe herrschenden kinematischen Gesetzmäßigkeiten, ist also sehr genau. Die einzig mögliche Abweichung liegt im Zahnspiel bei der Lastübergabe. Dieses ist jedoch vernachlässigbar klein, es liegt jedenfalls innerhalb der Bandbreite auch einer genauen Drehzahlmessung.

Bei einem hydrostatisch-mechanischen Leistungsverzweigungsgetriebe, bei dem das Summierungsplanetengetriebe ein vom hydrostatischen Zweig angetriebenes Sonnenrad, ein vom mechanischen Zweig angetriebenes Hohlrad und einen Planetenträger aufweist, ist der charakteristische Drehzahlwert die Drehzahl des Planetenträgers (Anspruch 2). Hier ergibt sich der Vorteil, daß nur ein einziges Drehzahlsignal benötigt wird. Ein Impulsgeber bzw Drehzahlsensor für den Planetenträger oder für ein direkt mit ihm verbundenes Glied ist zu Regelungszwecken bereits vorhanden. Weiters ist es vorteilhaft, daß der Planetenträger auch bei Stillstand des Fahrzeuges rotiert, daß somit immer ein genaues Drehzahlsignal vorhanden ist.

Bei einem hydrostatisch-mechanischen Leistungsverzweigungsgetriebe, bei dem das Summierungsplanetengetriebe ein Doppelplanetengetriebe mit einer vom hydrostatischen Zweig angetriebenen ersten Eingangswelle, einer vom mechanischen Zweig angetriebenen zweiten Eingangswelle, und zwei mit je einem Glied des Doppelplanetengetriebes verbundenen Ausgangswellen ist, ist der charakteristische Drehzahlwert die Differenz der Drehzahlen der beiden Ausgangswellen (Anspruch 3). Auch die hier erforderlichen zwei Geschwindigkeitssignale sind relativ leicht zu gewinnen, da beide Ausgangswellen Zahnräder tragen und die Differenzbildung auf sehr einfache Art auszuführen ist.

Vorzugsweise wird das Verfahren weiters so geführt, daß bei Veränderung des charakteristischen Drehzahlwertes des Summierungsplanetengetriebes während der Lastübergabe der Befehl zum Öffnen der Kupplung für den alten Bereich nicht gegeben wird, der Schließbefehl für die nächste Kupplung zurückgenommen und die Hydrostateinheit wieder in Richtung einer Lastübergabe auf die Kupplung für den alten Bereich verstellt wird (Anspruch 4). Durch die dabei erfolgende Entlastung der Kupplung wird diese häufig doch noch eingreifen.

Weiters liegt es im Rahmen des Verfahrens, nach Lastübergabe auf die Kupplung für den alten Bereich die Bereichsschaltung mit dem Befehl zum Schließen der Kupplung für den nächsten Bereich zu wiederholen (Anspruch 5). Dadurch braucht der Fahrer nicht einzugreifen, es wird automatisch noch einmal probiert. Das ist vor allem bei Klauenkupplungen von Vorteil, weil die Wahrscheinlichkeit, daß die Kupplungshälften zweimal en suite Zahn gegen Zahn stehen, extrem gering ist.

Im folgenden wird die Erfindung anhand von Abbildungen beschrieben und erläutert. Es stellen dar:
- Fig.1:: : Getriebeschema einer Ausführungsform eines Getriebes, bei dem das erfindungsgemäße Verfahren anwendbar ist,
- Fig.2:: Getriebeschema einer weiteren Ausführungsform eines Getriebes, bei dem das erfindungsgemäße Verfahren anwendbar ist,
- Fig.3:: Drehzahlplan zum Getriebe der Fig.1.

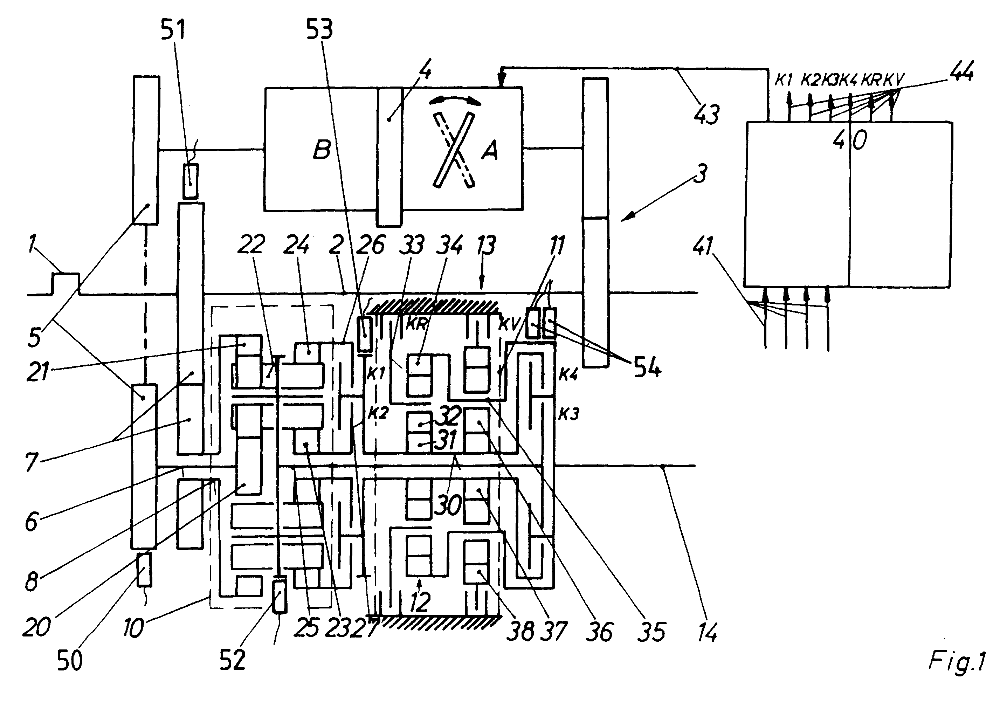

In Fig.1 ist der Motor 1, etwa eine Verbrennungskraftmaschine, nur angedeutet. Er treibt ohne dazwischen liegende Kupplung eine Getriebeeingangswelle. Diese treibt einerseits über eine erste Zahnradtransmission 3 eine steuerbare Hydrostateinheit 4, deren Ausgang über eine zweite Zahnradtransmission 5 eine erste Eingangswelle 6 antreibt. Andererseits treibt die Getriebeeingangswelle 2 über eine dritte Zahnradtransmission 7 eine zweite Eingangswelle 8. Die Hydrostateinheit 4 besteht aus zwei hydrostatischen Maschinen A,B, wovon immer eine als Motor und eine als Pumpe arbeitet. Die Maschine A ist stufenlos in beiden Drehrichtungen steuerbar.

Die beiden Eingangswellen 6,8 sind Teil eines Summierungsplanetengetriebes 10, von dem aus über Kupplungen K1,K2 ein Stufengetriebe 11 angetrieben wird, welches hier aus einer ersten Planetengetriebestufe 12 mit einer Kupplung KR (genauer: einer Bremse) und einer zweiten Planetengetriebestufe 13 mit einer Kupplung (genauer: einer Bremse) KV besteht. Über Kupplungen K3,K4 wird eine Abtriebswelle 14 geschaltet, die beispielsweise dem Antrieb eines Fahrzeuges dient.

Das Summierungsplanetengetriebe 10 enthält eine erste Sonne 20, ein erstes Hohlrad 21 und abgestufte Planeten 22, die den ersten Planetensatz bilden. Der zweite Planetensatz besteht aus einer zweiten Sonne 23, einem Hohlrad 24 und den abgestuften Planeten 22, die beiden Sätzen gemeinsam sind. Die Planeten 22 sind auf einem Planetenträger 25 gelagert, dessen Welle 25' die erste Ausgangswelle des Summierungsplanetengetriebes 10 darstellt. Das zweite Hohlrad 24 wirkt über eine Hohlradwelle 26 auf die Kupplung K1 und stellt die zweite Ausgangswelle dar. Die zweite Sonne 23 wirkt über eine Sonnenwelle 27 auf die Kupplung K2 und stellt die dritte Ausgangswelle des Summierungsplanetengetriebes 10 dar.

Die erste Stufe 12 des Stufengetriebes 11 besteht aus einem ersten Sonnenrad 31, ersten Planetenrädern 32, einem ersten Planetenträger 33 und einem ersten Ringrad 34. Die Sonnenradwelle 30 wird wahlweise von einer der beiden Kupplungen K1,K2 angetrieben, der erste Planetenträger 33 ist mittels der Kupplung KR am stationären Gehäuse festbremsbar. Das erste Ringrad 34 ist mit einem zweiten Planetenträger 35 der zweiten Planetengetriebestufe 13 drehfest verbunden. Dessen Planetenräder 36 kämmen innen mit einem zweiten Sonnenrad 37, das mit der Sonnenradwelle 30 drehfest verbunden ist und außen mit einem zweiten Ringrad 38, welches über die Kupplung KV am Gehäuse festbremsbar ist. Die Abtriebswelle 14 ist mit dem zweiten Planetenträger 35 drehfest verbunden und über die Kupplungen K3,K4 entweder mit der Planetenträgerwelle 25 oder mit der Sonnenradwelle 30 drehfest verbindbar.

Weiters ist ein Steuergerät 40 angedeutet. Dieses erhält von einem Fahrpedal 42 eine Last- bzw Geschwindigkeitsvorgabe, über Signalleitungen 41 gemessene Betriebs- und Fahrparameter und von Impulsgebern 50 bis 54 Geschwindigkeitssignale, und zwar 50: Hydrostat 4, 51: Antriebsmotor 1, 52: Planetenträger 25, 53: Sonnenwelle 27, 54: zweiter Planetenträger 35, doppelt zur Feststellung des Drehsinnes.

Aus diesen Signalen bildet das Steuergerät 40 Steuersignale für den Hydrostaten 4, die diesem über die Steuerleitung 43 übermittelt werden und Steuersignale 44 für die Kupplungen K1,K2, K3,K4,KR,KV. Das Signal des Impulsgebers 52 wird im Steuergerät 40 auch zur erfindungsgemäßen Überprüfung, ob die jeweilige Kupplung eingerückt ist, verwendet.

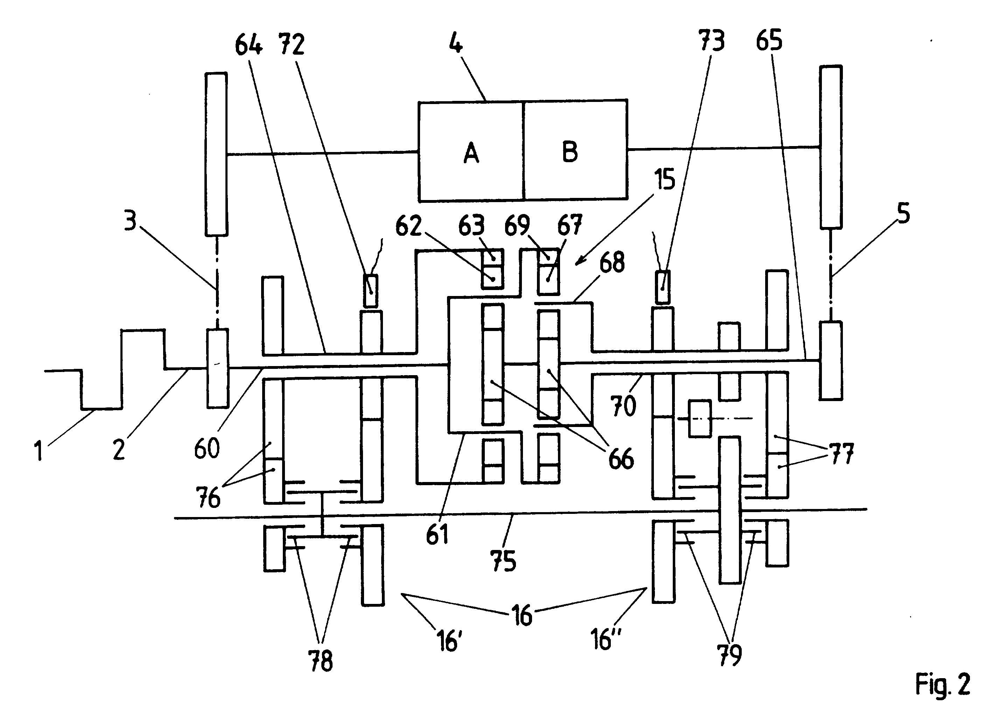

In dem in Fig.2 dargestellten abgewandelten Getriebe ist wieder der Motor mit 1, die Antriebswelle mit 2, der Hydrostat mit 4, dessen Antrieb mit 3, und dessen Abtrieb mit 5 bezeichnet. Das Summierungsplanetengetriebe 15 ist vierwellig und das in Kraftflußrichtung daran anschließende Stufengetriebe 16 besteht aus zwei Teilen 16', 16".

Der mechanische Zweig beginnt mit einer ersten Eingangswelle 60, die drehfest mit einem ersten Planetenträger 61 verbunden ist. Dessen erste Planeten 62 kämmen mit einem ersten Hohlrad 63, welches mit einer ersten Ausgangswelle 64 gekuppelt ist. Zum hydrostatischen Zweig gehört eine zweite Eingangswelle 65 mit einem Doppelsonnenrad 66, welches mit den ersten Planeten 62 und mit zweiten Planeten 67 kämmt. Diese sitzen auf einem Planetenträger 68 und kämmen mit einem zweiten Hohlrad 69. Der Planetenträger 68 ist mit einer zweiten Ausgangswelle 70 gekuppelt, das zweite Hohlrad 69 mit dem ersten Planetenträger 61. Für die Messung der Drehzahl von erster Ausgangwelle 64 und zweiter Ausgangswelle 70 ist ein erster Impulsgeber 72 und zweiter Impulsgeber 73 vorgesehen.

Erste und zweite Ausgangswelle 64, 70 mit ihren Zahnrädern gehören bereits zum nachgeschalteten Stufengetriebe 16, von einer Getriebeabtriebswelle 75 werden beispielsweise die nicht dargestellten Räder eines Kraftfahrzeuges angetrieben. Mit 76 ist eine Zahnradstufe des einen Teiles 16' und mit 77 eine von mehreren Zahnradstufen der anderen Hälfte 16" des Stufengetriebes bezeichnet. Sie und weitere nicht bezeichnete Zahnradstufen werden über eine erste Kupplung 78 bzw. eine zweite Kupplung 79 und weitere mit der Getriebeabtriebswelle 75 verbunden.

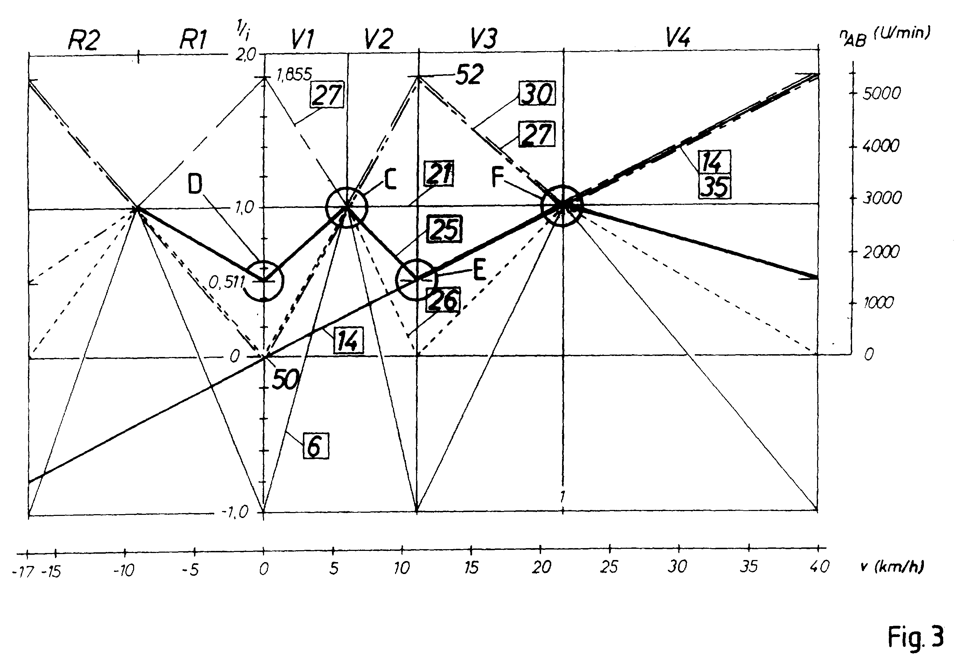

Nun wird das erfindungsgemäße Steuerverfahren anhand des Geschwindigkeitsplanes der Figur 3 veranschaulicht. Auf der Abszisse ist die Geschwindigkeit des Fahrzeuges aufgetragen, auf der Ordinate die Abtriebsdrehzahlen eines Getriebes gemäß Figur 1. Auf der der Geschwindigkeit 0 entsprechenden Abszisse sind die Regelstellungen des Hydrostaten aufgetragen. Am horizontalen oberen Bildrand sind die Bereiche ersichtlich und durch eine vertikale Linie die jeweiligen Bereichsgrenzen eingetragen. Jeder Bereich entspricht einer bestimmten Stellung der Kupplungen und somit einer Stufe des Stufengetriebes.

Die diversen Geraden im Diagramm entsprechen den Drehzahlen der jeweils eingerahmt bezeichneten Getriebeglieder, mit 25 somit die Drehzahl des Planetenträgers 25 des Summierungsplanetengetriebes. Es ist zu erkennen, daß dieser Linienzug an jeder Bereichsgrenze eine Unstetigkeit aufweist. Diese Unstetigkeiten sind eingerahmt und mit C,D,E und F bezeichnet. Diese Unstetigkeit bedeutet, daß während der Bereichsschaltung die Drehzahl dieses Gliedes unverändert bleibt. In stark vergrößerter Darstellung würde man sehen, daß sie Haltepunkte sind, die bei Erreichen der Synchrondrehzahl beginnen und beim Verlassen der Synchrondrehzahl, somit bei Öffnen der dem alten Gang entsprechenden Kupplung, wieder aufhören. Von dieser Besonderheit derartiger Getriebe macht das erfindungsgemäße Verfahren Gebrauch.

Es verdient besondere Beachtung, daß die erfindungsgemäße Überprüfung ohne irgendwelche baulichen Veränderungen möglich ist, die erforderlichen Impulsgeber sind in vielen Fällen bereits vorhanden. Es ist nur eine entsprechende Änderung der im Steuergerät 40 gespeicherten Steuerbefehle erforderlich.

## Patentansprüche

1. Verfahren zum Steuern eines hydrostatisch-mechanischen Leistungsverzweigungsgetriebes, das aus einer verstellbaren Hydrostateinheit (4), einem mehrwelligen Summierungsplanetengetriebe (10;15) zur Zusammenführung von mechanischem Zweig und hydrostatischem Zweig und einem nachgeschalteten Stufengetriebe (11;16) zur Bildung von "n" in Synchronpunkten aneinander anschließenden Schaltbereichen (V₁, V₂,...,Vₙ) besteht, welche mittels Verstellung der Hydrostateinheit (4) durchfahren werden, wobei bei jeder Schaltung von einem alten Bereich (Vₓ) in einen nächsten Bereich (Vₓ₋₁; Vₓ₊₁)
a) zuerst bei Erreichen der Synchrondrehzahl der Befehl zum Schließen der Kupplung für den nächsten Bereich (Vₓ₋₁; Vₓ₊₁) gegeben wird,
b) dann die Lastübergabe von der Kupplung für den alten Bereich (Vₓ) zu der Kupplung für den nächsten Bereich (Vₓ₋₁; Vₓ₊₁) durch Verstellen der Hydrostateinheit vorgenommen wird und
c) dann der Befehl zum Öffnen der Kupplung für den alten Bereich (Vₓ) gegeben wird,
dadurch **gekennzeichnet**, daß der Befehl zum Öffnen der Kupplung für den alten Bereich (Vₓ) nur gegeben wird, wenn festgestellt wird, daß während der Lastübergabe ein charakteristischer Drehzahlwert des Summierungsplanetengetriebes (10) konstant bleibt.

2. Verfahren zum Steuern eines hydrostatisch-mechanischen Leistungsverzweigungsgetriebes nach Anspruch 1, wobei das Summierungsplanetengetriebe (10) ein vom hydrostatischen Zweig angetriebenes Sonnenrad (20), ein vom mechanischen Zweig angetriebenes Hohlrad (21) und einen Planetenträger (25) aufweist, **dadurch gekennzeichnet**, daß der charakteristische Drehzahlwert die Drehzahl des Planetenträgers (25) ist.

3. Verfahren zum Steuern eines hydrostatisch-mechanischen Leistungsverzweigungsgetriebes nach Anspruch 1, wobei das Summierungsplanetengetriebe (15) ein Doppelplanetengetriebe mit einer vom mechanischen Zweig angetriebenen ersten Eingangswelle (60), einer vom hydrostatischen Zweig angetriebenen zweiten Eingangswelle (65), und zwei mit je einem Glied des Doppelplanetengetriebes verbundenen Ausgangswellen (64,71) ist, **dadurch gekennzeichnet,** daß der charakteristische Drehzahlwert die Differenz der Drehzahlen der beiden Ausgangswellen (64,71) ist.

4. Verfahren zum Steuern eines hydrostatisch-mechanischen Leistungsverzweigungsgetriebes nach Anspruch 1, dadurch **gekennzeichnet**, daß bei Veränderung des charakteristischen Drehzahlwertes des Summierungsplanetengetriebes (10;15) während der Lastübergabe der Befehl zum Öffnen der Kupplung für den alten Bereich (Vₓ) nicht gegeben wird, der Schließbefehl für die nächste Kupplung zurückgenommen wird und die Hydrostateinheit (4) wieder in Richtung einer Lastübergabe auf die Kupplung für den alten Bereich (Vₓ) verstellt wird.

5. Verfahren zum Steuern eines hydrostatisch-mechanischen Leistungsverzweigungsgetriebes nach Anspruch 4, dadurch **gekennzeichnet**, daß nach Lastübergabe auf die Kupplung für den alten Bereich (Vₓ) die Bereichsschaltung mit dem Befehl zum Schließen der Kupplung für den nächsten Bereich (Vₓ₋₁; Vₓ₊₁) wiederholt wird.

## Claims

1. A method of controlling a hydrostatic/mechanical power split transmission, which comprises an adjustable hydrostat unit (4), a multiple shaft summing planetary gearbox (10;15) for combining the mechanical path and hydrostatic path, and a step gearbox (11; 16) connected downstream in order to form "n" gear change ranges (V₁, V₂,...,Vₙ), which adjoin one another at synchronization points and are passed through by means of adjusting the hydrostat unit (4), it being the case that, at each change from an old range (Vₓ) to a next range (Vₓ₋₁; Vₓ₊₁),
a) firstly, when the synchronization speed is reached, the command to engage the clutch for the next range (Vₓ₋₁ ; Vₓ₊₁) is given,
b) then the transfer of the load from clutch for the old range (Vₓ) to the clutch for the next range (Vₓ₋₁ ; Vₓ₊₁) is performed by adjusting the hydrostat unit, and
c) then the command to disengage the clutch for the old range (Vₓ) is given,
wherein the command to disengage the clutch for the old range (Vₓ), is given only if it is established that, during the load transfer, a characteristic speed value of the summing planetary gearbox (10) remains constant.

2. The method of controlling a hydrostatic/mechanical power split transmission as claimed in claim 1, the summing planetary gearbox (10) having a sun wheel (20) driven by the hydrostatic path, an internal gear (21) driven by the mechanical path, and a planet carrier (25), wherein the characteristic speed value is the speed of the planet carrier (25).

3. The method of controlling a hydrostatic/mechanical power split transmission as claimed in claim 1, the summing planetary gearbox (15) being a double planetary gearbox with a first input shaft (60) driven by the mechanical path, a second input shaft (65) driven by the hydrostatic path, and two output shafts (64, 71), each connected to an element in the double planetary gearbox, wherein the characteristic speed value is the difference between the speeds of the two output shafts (64, 71).

4. The method of controlling a hydrostatic/mechanical power split transmission as claimed in claim 1, wherein, if the characteristic speed value of the summing planetary gearbox (10; 15) changes during the load transfer, the command to disengage the clutch for the old range (Vₓ) is not given, the engage command for the next clutch is withdrawn and the hydrostat unit (4) is adjusted again in the direction of a transfer of the load to the clutch for the old range (Vₓ).

5. The method of controlling a hydrostatic/mechanical power split transmission as claimed in claim 4, wherein, after the load has been transferred to the clutch for the old range (Vₓ), the range change is repeated with the command to engage the clutch for the next range (Vₓ₋₁ ; Vₓ₊₁).

## Revendications

1. Procédé pour commander une transmission à division de puissance mécano-hydrostatique qui est constituée d'une unité hydrostatique réglable (4), d'un engrenage planétaire composite multiple (10 ; 15) pour la jonction d'une branche mécanique et d'une branche hydrostatique et d'un mécanisme de rapports d'entraînement secondaire (11 ; 16) pour la formation de "n" rapports d'entraînement (V₁ , V₂ ,..., Vₙ) raccordés entre eux en des points synchrones, lesquels sont engagés en réglant l'unité hydrostatique (4), d'où il résulte que, chaque fois que l'on change de vitesse en passant d'un ancien rapport (Vₓ) dans un nouveau rapport (Vₓ₋₁; Vₓ₊₁)
a) on commande tout d'abord l'engagement de l'embrayage pour le nouveau rapport (Vₓ₋₁; Vₓ₊₁) lorsque la vitesse synchrone est atteinte,
b) puis on procède au transfert de charge de l'embrayage dans l'ancien rapport (Vₓ) à l'embrayage dans le nouveau rapport (Vₓ₋₁; Vₓ₊₁) en réglant l'unité hydrostatique,
(c) puis on commande le désengagement de l'embrayage dans l'ancien rapport (Vₓ),
caractérisé en ce que l'on commande le désengagement de l'embrayage dans l'ancien rapport (Vₓ) uniquement si l'on détermine qu'une valeur de vitesse caractéristique de l'engrenage planétaire composite (10) reste constante pendant le transfert de charge.

2. Procédé pour commander une transmission à division de puissance mécano-hydrostatique selon la revendication 1, dans laquelle l'engrenage planétaire composite (10) comporte une roue centrale (20) entraînée par la branche hydrostatique, une couronne de train planétaire (21) entraînée par la branche mécanique et une cage de transmission planétaire (25), caractérisé en ce que la valeur de vitesse caractéristique est la vitesse de la cage de transmission planétaire (25).

3. Procédé pour commander une transmission à division de puissance mécano-hydrostatique selon la revendication 1, dans laquelle l'engrenage planétaire composite (15) est un engrenage planétaire double, comportant un premier arbre d'entrée (60) entraîné par la branche mécanique, un second arbre d'entrée (65) entraîné par la branche hydrostatique et deux arbres de sortie (64, 71), chacun d'eux étant raccordé à un élément de l'engrenage planétaire double, caractérisé en ce que la valeur de vitesse caractéristique est la différence entre les vitesses des deux arbres de sortie (64, 71).

4. Procédé pour commander une transmission à division de puissance mécano-hydrostatique selon la revendication 1, caractérisé en ce que, lorsque la valeur de vitesse caractéristique de l'engrenage planétaire composite (10 ; 15) est modifiée pendant le transfert de charge, on ne commande pas le désengagement de l'embrayage dans l'ancien rapport (Vₓ), on supprime la commande d'engagement du nouvel embrayage et on règle à nouveau l'unité hydrostatique (4) dans le sens d'un transfert de charge sur l'embrayage dans l'ancien rapport (Vₓ).

5. Procédé pour une transmission à division de puissance mécano-hydrostatique selon la revendication 4, caractérisé en ce que, après le transfert de charge sur l'embrayage dans l'ancien rapport (Vₓ), l'on répète le changement de rapport en commandant l'engagement de l'embrayage dans le nouveau rapport (Vₓ₋₁; Vₓ₊₁),
